# EUROPEAN PATENT SPECIFICATION

(11) **EP 3 840 453 B1**
(45) Date of publication and mention of the grant of the patent: **31.05.2023**
(21) Application number: 19383164.1
(22) Date of filing: 20.12.2019
(51) Int. Cl.: H04W 24/00, H04W 24/04, H04W 24/08, H04W 24/10, G06F 11/00, G06F 11/30

(54) **METHOD FOR DETECTING ANOMALIES IN MOBILE TELECOMMUNICATION NETWORKS**
VERFAHREN ZUR ERKENNUNG VON ANOMALIEN IN MOBILEN TELEKOMMUNIKATIONSNETZEN
PROCÉDÉ DE DÉTECTION D'ANOMALIES DANS DES RÉSEAUX DE TÉLÉCOMMUNICATION MOBILES

(43) Date of publication of application: 23.06.2021
(73) Proprietor: Telefonica Digital España, S.L.U., 28013 Madrid (ES)
(72) Inventor: LEONTIADIS, Ilias, 28013 MADRID (ES); LUTU, Andra, 28013 MADRID (ES); PERINO, Diego, 28013 MADRID (ES)
(74) Representative: Herrero & Asociados, S.L.

(56) References cited:
- WO-A1-2019/133928
- US-A1- 2013 268 595
- US-A1- 2017 046 127
- US-A1- 2019 342 145

## Description

### Field of the invention

The present invention has its application within the telecommunication sector, more specifically, relates to the deployment of tools to assist Mobile Network Operators (MNO) in their efforts to optimize their network operations and maintain network extensive deployments in any area.

More particularly, the present invention refers to a method for detecting anomalies in mobile or cellular networks.

### Background of the invention

Researchers have been exploring wireless community networks for many years and, more recently, researchers and practitioners have started building community mobile networks. Maintaining large mobile telecommunication network deployments is challenging.

The Louvain method for community detection is an existing method to extract communities from large networks. Communities are groups of nodes within a mobile network that are more densely connected to one another than to other nodes. The Louvain method works as follows:
- First phase:
   - Assign each node to its own community.
   - Then, for each node i, the change in modularity is calculated for removing i from its own community into the community of its neighbor j. Modularity is a measure, which ranges between -1 and 1, related to the structure of a network or graph. Optimizing modularity results in the best possible grouping of the graph. The formal definition of modularity is: The fraction of the edges that fall within the given communities minus the expected fraction if edges were distributed at random. Networks with high modularity have dense connections between the nodes within communities but sparse connections between nodes in different communities.
   - Once modularity is calculated for all communities to which node i is connected, said node i is placed into the community that resulted in the greatest modularity increase. If no increase is possible, the node i remains in its own community.
   - This process is applied repeatedly and sequentially until no modularity increase can occur.
- Second phase:
   - Groups all of the nodes in the same community and builds a new network where nodes are the communities from the previous phase.
   - Any links between nodes of the same community are now represented by self loops on the new community node and links from multiple nodes in the same community to a node in a different community are represented by weighted edges between communities

The Louvain method uses as input a distance matrix with the distance between all pairs of nodes and translates the distance matrix into a network graph by adding a connection between all pairs of nodes. Based on the Louvain Heuristics, the best partition of the network into communities is computed by tuning the resolution parameter R, which is a hyperparameter representing time as described in 'Laplacian Dynamics and Multiscale Modular Structure in Networks', by Lambiotte R. et al., October 2019. Lambiotte R. et al. discloses that, as time grows, the size of the communities is adjusted to reveal the possible hierarchical structure present in those networks for which finding just one partition is not satisfactory; i.e., when time is increased, communities detected by the Louvain method are larger and larger Consequently, changing the size of the communities only alters the resolution of the method. Therefore, the Resolution R controls the size of the community for those nodes that can belong to more than one community as follows: setting a high value of R results in a larger size of the community (and low overall number of communities), but with a tradeoff on the homogeneity of the community (i.e., larger communities are more heterogenous).

In addition, the Louvain method calculates the modularity, which counts the number of connections/links within communities and compares it to the expected number of such links in an equivalent null model. Modularity is a scale value between -1/2 and 1, which measures the density of edges inside communities to edges outside communities. Optimizing the modularity value results theoretically in the best possible grouping of the nodes of a given network, however going through all possible iterations of the nodes into groups is impractical, so heuristic algorithms are used. In the Louvain Method of community detection, first small communities are found by optimizing modularity locally on all nodes, then each small community is grouped into one node and the first step is repeated. In order to reduce the amount of connections, the Louvain method either removes all the edges that exceed a given threshold or the number of neighbour nodes K is tuned; therefore, K is another hyperparameter used in the community detection.

Given different configurations of the hyperparameters K (number of neighbour nodes) and R (resolution), a technical problem is to detect anomalies per community.

First, today it is hard to monitor large networks and the huge amount of anomalies using normal metrics. An anomaly is an observation that does not conform to the normal, expected behaviour. Frequently, the Mobile Network Operator (MNO) does not know which part of the network is responsible and it takes a long time (typically, 3-4 weeks) to identify a single anomaly via men-hours of radio and network optimizers. Further, forecasting of anomalies does not really happen, although this can help deployment (e.g., investment criteria, planning, reconfiguration). Finally, billions are spent to maintain and optimize a network to address these issues.

Second, unknown and unpredictable misconfigurations of a network, which may happen all the time in different parts of the network, can cause a very high network latency (typically, delays up to 150ms). This impacts Quality of Experience (QoE) of a whole area, generating churn, millions of economic losses, and leading to poor customer satisfaction (delays up to 150ms move customer satisfaction index from 5 to 1).

US 2013/268595 A1 discloses a method of detecting user communities in a telecommunication network, wherein the nodes corresponding to users of the telecommunication network are generated, based on the fields extracted from communication records that contain data regarding communications of the users, and the similarities between pairs of nodes are determined using a similarity metric that measures relationships between the users, in order to group the nodes into nonoverlapping communities based on the determined similarities.

US 2017/046127 A1 discloses a monitoring system standard deviation, but not in relation with performance metric calculated for all the network elements of a same cluster in a same timeframe.

US 2019/342145 A1 discloses to obtain a link similarity matrix; performing clustering on all the faulty links based on the link similarity matrix, to obtain at least one link cluster; and performing survivability analysis on services on the at least two preset links based on each of the at least one link cluster.

WO 2019/133928 A1 discloses an "eviction" strategy to remove entries in records to accomodate new records. Some known eviction strategies are Least Recently Used or First in First Out.

Therefore, there is a need in the state of the art for improving customer experience without increasing the cost for the Mobile Network Operator (MNO).

### Summary of the invention

The present invention solves the aforementioned problems and overcomes previously explained state-of-art work limitations by providing a method of context-based anomaly detection by correlating user side to network side and network topology. The method does not only correlate user and network data to detect an anomaly but is further able to identify the root cause of the anomaly.

An objective of the present invention is to autonomously monitor customer experience across all cells of a mobile network and provide Mobile Network Operators (MNO) with an analysis on the root cause behind the possible anomalies. Having the root cause, the invention can raise alarms/tickets for a relevant team of maintenance/operation of the mobile network.

The present invention considers that the mobile network subdivided by sectors, wherein a sector is the most granular unit that captures the area covered by a specific technology of base station. At a site, there are technology-specific Network Elements (NEs) working as base stations, each NE having one or more sectors associated.

The present invention takes a set of input data from different data sources: i) user level performance; ii) network level performance; iii) network topology. From these input data, different network communities can be characterized and, for each community, the invention is able to identify anomalies by applying a context-based anomaly detection mechanism for clusters of NEs (or sectors) that have similar time series behaviour.

For this purpose, firstly the NEs (and/or their associated sectors) having similar behavior for long periods of time are identified by:
- detecting time series similarity using a Root Mean Squared Euclidean Distance (RMSED)
- detecting a community by means of the Louvain method and building clusters of NEs/sectors in the detected community.

The NEs/sectors that deviate from their own communities for short periods of time (e.g., a day) are labelled as anomalies. An anomaly is defined in the context of the invention as an observation that deviates from the mean of its community by over/under N*std. N represents a threshold value to trigger anomalies; for example, N can be an integer number and vary from 1 to 5 (or higher). The value of N is set based on the MNO's experience and depends on the anomaly detection sensitivity required by the operator. For example, for a value N=2, an alarm for anomaly is triggered when the value of a sample/observation is higher than (mean + 2*std) or lower than (mean - 2*std), std denoting the standard deviation. An observation is a specific metric calculated for all the sectors that form a community. The calculated metrics can be based on performance metrics collected from the user side and/or the network side. Therefore, for each community, the method proposed here locates the sector that its absolute difference from the mean divided by the standard deviation (std) for a monitored time period (e.g., a day) was the highest among all the monitored time periods (days) and sectors within the same community.

An aspect of the present invention refers to a computer program implemented method for detecting anomalies in cellular/mobile networks which comprises the following steps:
i) collecting, by a network counter, time series data input data, based on performance metrics obtained for a plurality of network elements of the mobile network,
ii) defining a similarity metric as a multi-dimensional vector of performance-related metrics by calculating the squared euclidean distance between network elements using the performance metrics obtained for the network elements;
iii) detecting clusters of network elements that have the same value of the similarity metric by applying the Louvain algorithm;
iv) obtaining a first list of network elements from the clusters with anomalies at a same timeframe, wherein each network element of the first list have a value of the similarity metric in the timeframe which differs from the average value of the similarity metrics of the clusters to which the network element belongs in a number N of times the standard deviation for the used performance metric calculated for all the network elements of the same cluster, N being a threshold parameter tunable by the mobile network operator;
v) identifying a parent network element, which is the nearest network element to all the network elements of the first list, by using a topology graph;
vi) obtaining a second list which comprises the first list and the identified parent network element, if at least one parent is identified;
vii) checking the second list against a ticketing or alarm system to check whether any open ticket or active alarm is associated with any network element of the second list, and all the network elements for which any ticket or alarm is active are dropped out from the the second list to obtain a third list;
viii) repeating steps iv)-vi) for different timeframes and obtaining a fourth list of network elements comprising the network elements that have the same value of the similarity metric for each timeframe and the time series metrics.

The method in accordance with the above described aspects of the invention has advantages with respect to the aforementioned prior art, which can be summarized as follows:
- Flexibility: the present invention allows the operators (MNOs) to tune different parameters (e.g., the interval of normal values, the resolution R, the size of the community etc.) and thus reflect their own experience in deploying the anomaly detection in their networks.
- As opposed to using fixed heuristics (e.g., thresholds that the operators set up, given KPIs based on their past experience), the present invention allows for continuous learning and automatic generation and adjustment of heuristics that capture anomalous behaviour of network elements.
- The present invention improves customer experience without increasing the cost for MNOs by automatizing the identification of each anomaly and analysing its root cause.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a flow chart of a method for detecting anomalies in mobile networks,
Figure 2A shows a graphic of the distribution of number of anomalies per communities for different combinations of resolution and modularity, and for hyperparameter K = 2 and threshold parameter N = 1.
Figure 2B shows a graphic of the distribution of number of anomalies per communities for different combinations of resolution and modularity, and for hyperparameter K = 5 and threshold parameter N = 1.
Figure 2C shows a graphic of the distribution of number of anomalies per communities for different combinations of resolution and modularity, and for hyperparameter K = 10 and threshold parameter N = 1.
Figure 3A shows a graphic of the distribution of number of anomalies per communities for different combinations of resolution and modularity, and for hyperparameter K = 2 and threshold parameter N = 1'5.
Figure 3B shows a graphic of the distribution of number of anomalies per communities for different combinations of resolution and modularity, and for hyperparameter K = 5 and threshold parameter N = 1'5.
Figure 3C shows a graphic of the distribution of number of anomalies per communities for different combinations of resolution and modularity, and for hyperparameter K = 10 and threshold parameter N = 1'5.
Figure 4A shows a graphic of the distribution of number of anomalies per communities for different combinations of resolution and modularity, and for hyperparameter K = 2 and threshold parameter N = 2.
Figure 4B shows a graphic of the distribution of number of anomalies per communities for different combinations of resolution and modularity, and for hyperparameter K = 5 and threshold parameter N = 2.
Figure 4C shows a graphic of the distribution of number of anomalies per communities for different combinations of resolution and modularity, and for hyperparameter K = 10 and threshold parameter N = 2.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

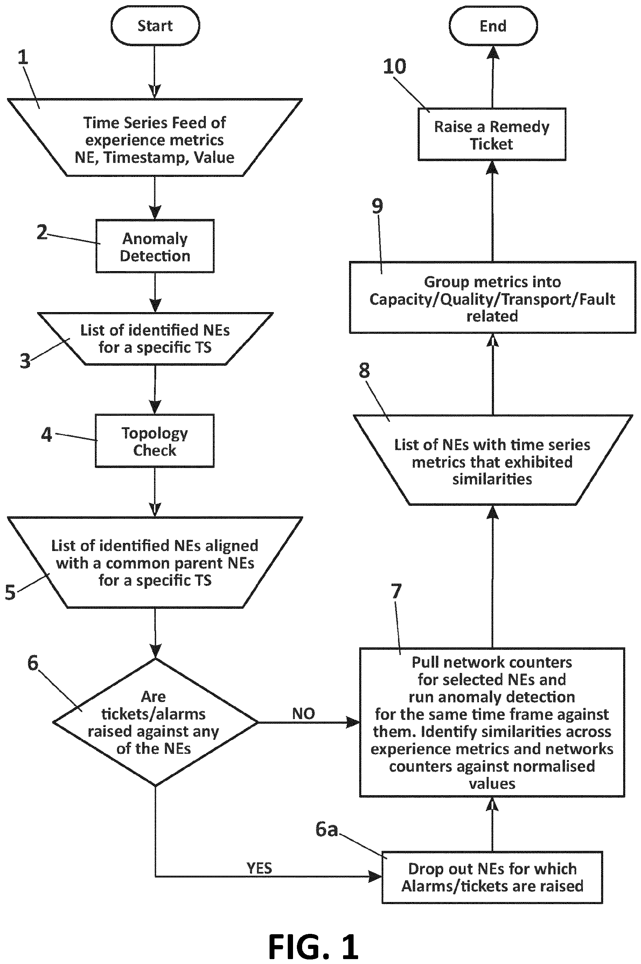

A preferred embodiment of the invention relates to a method for detecting anomalies in a network which comprises the following ten steps depicted in the application process flow diagram shown in figure 1.
1. The input to the application flow is the data coming from the any other cell-aggregated user experience or performance metrics (e.g., packet loss, retransmissions, throughput and latency) strongly correlated with the experience of end-users. It is a time series data input (1) with variable granularity against each of the Network Elements, NEs. A Network Element, NE, is associated with a cell and/or a sector, in the network.
2. An anomaly detection algorithm runs on the above timeseries data and identify or detect (2) NEs on which customer experience metrics dropped. The anomaly detection algorithm is based on few steps:
   - First, NEs with similar behaviour are clustered. This is achieved by defining a "similarity" metric, which is either a single performance metric or combination of different performance metrics (e.g., a combined metric of packet loss, retransmissions, throughput and/or latency, etc), i.e., a multi-dimensional vector of performance-related metrics can be used to create the similarity metric. In a possible embodiment, the method identifies the sectors that have similar time series behaviour by calculating the Squared Euclidean distance between sectors for multiple KPIs (Key Performance Indicators) and different time periods (e.g., hours).
   - Based on this similarity metric, the method identifies the K Nearest Neighbors on the full graph of NEs to prune some edges that would not be useful (i.e., low similarity scores indicate that two NEs are unlikely be part of the same cluster/community).
   - Then, the Louvain algorithm is applied to build clusters/communities of NEs with similar behavior.
3. The anomaly detection algorithms provides a first list (3) of identified NEs that had anomaly detected within the same timeframe, TS. An NE is considered to behave in an anomalous fashion if the similarity metric differs from the average of the clusters to which it belongs in (e.g., two) N times standard deviation (where N is a tunable parameter, N being a positive number).
4. All the NEs identified to have an anomaly within the same timeframe are an input into a topology graph (4) which can identify the nearest common parent NE. The parent NE can be a router, a security gateway, a radio network controller, a base station controller and so on.
5. The output of the Topology check provides a second list (4) of identified NEs that had anomaly detected within the given timeframe, TS, along with their common parents, if at least one parent NE is identified.
6. This, second, list of all the identified NEs, parents and children, is being checked against ticketing/alarms feeds coming from a ticketing or alarm system to check against any open tickets or active alarms against those identified NEs.
   a. All the NEs against which the tickets or alarms are active are being dropped out (6a) from the list to obtain a third list (6) of NEs
7. For the resulting, third list (6) of NEs identified in the previous step, the application pulls all the available network counters and runs a similar anomaly detection on those counters like in step 2. The network counters collect an exhaustive set of different network performance metrics used by the network operators to capture the status of their network, including: radio status (e.g., signal strength metrics such as RSRQ - Reference Signals Received Power-, RSSI -Received Signal Strength Indicator-, etc), network performance (latency, throughout etc), network occupancy, user mobility etc. Then, the network counters get the collected network performance metrics normalised and compared against the normalised user experience metrics input in step 1. Only the counters with similar patterns are selected (7) for the output to obtain a fourth list of NEs.
   Each of the NEs along with parent NEs with selected counters and experience metrics have a timeseries table created that covers a monitored time period (e.g., 24hours) preceding the timestamp in which an anomaly was detected. The fourth list (8) of NEs comprises the identified NEs that had exhibited similarities and along with time series metrics.
8. The NEs are categorised based on the largest number of counters in a counter category list (9), according to categories defined by the mobile network operator to classify the anomalies, e.g., according to categories such as Capacity, Quality, Transport and Fault.
9. A ticket is raised or an alarm is generated (10) against a specific type of issue.

According to different embodiments, some examples of the time series data used for input (1) to the application are:
- Topology information of the network
- User side metrics:
   ∘ Virtual Drive Test (VDT) metrics. That is a set of Level4 performance metrics extracted from user Weblogs.
   ∘ Additional metrics from webs or social networks, for example, Google metrics or Facebook metrics (if possible, to ingest). Facebook are present only for cells with alarms based on Facebook quality metrics and can be aggregated per week, providing very granular view on the network.
   ∘ Instantaneous performance data from the radio network
   ∘ Information from the IP Multimedia Subsystem, IMS.
   ∘ Data from a dataset that captures the performance of the radio network measured from the user perspective (e.g., metrics such as latency or throughput captured with code running on end-user mobile devices).
   ∘ Any other user quality of experience indicator
- Network side metrics
   ∘ network performance metrics (for 2G/3G/4G network operators) captured by monitoring the state of their network from the network side, obtaining equivalent metrics from the network side to those captured from the end-user side (i.e., latency, packet loss, packet retransmissions or throughput).
   ∘ Any other collection system of Key Performance Indicators, KPIs.
   ∘ Topology database
   ∘ Any transmission metrics
- Ticketing system (e.g., Remedy tickets from the Remedy Action Request System, ARS, which is a client-server trouble ticketing application used to track internal problems and customer-reported issue; Netcool Alarms, and any other ticketing system). Once the method generates alarms, the information from these alarms can appear as tickets in a ticketing system. Alternatively, the information from the ticketing system can be used to build a dataset of labelled anomalies and integrate them into the learning loop of the method.

At the end of the method shown in Figure 1, the labels for observations (experience metrics) that are considered anomalies can be obtained, in order to use, for example, in a ticketing system. If a calculated metric deviates from the mean by over/under N*std is labelled as anomaly, wherein std denotes the standard deviation of the specific metric calculated for all the NEs of a community. Preferred values for the tunable threshold parameter N are 1≤N≤2; e.g., N= 1, N = 1.5, N = 2.

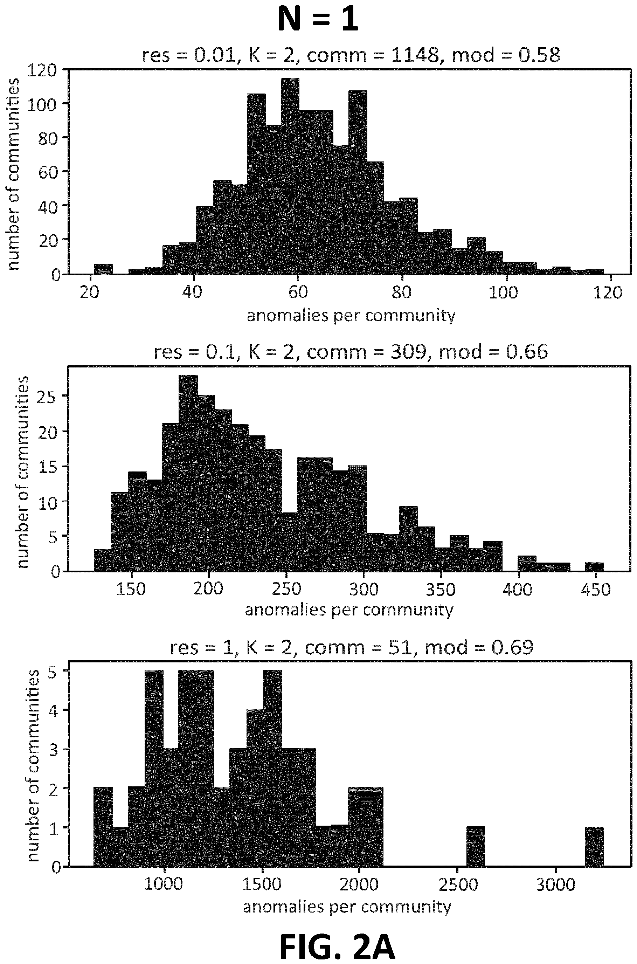

By tuning the hyperparameters K and resolution, a set of validation data can be built to evaluate accuracy of the method, for example, evaluating the hour-by-hour deviation. A set of ground truth anomalies can be built based on the set of alarms and issues (i.e., tickets) which the operator deals with to keep the network running normally. This information is usually stored and then the stored information can be used just for the analysis of the monitored sector and merged with other information of the whole community. Possible values for the hyperparameters K and resolution are: K = (2, 5, 10), resolution = (0.01, 0.1, 1). This selection of the hyperparameters values by plotting the distribution of number of anomalies per communities for different combinations of K, resolution and N, as shown in Figures 2A-2C, 3A-3C and 4A-4C.

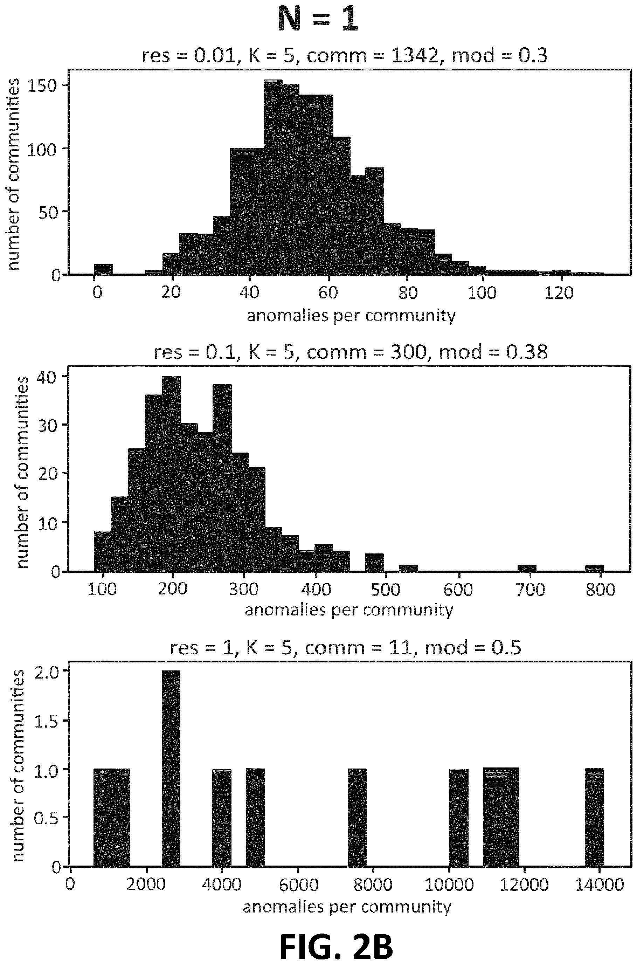

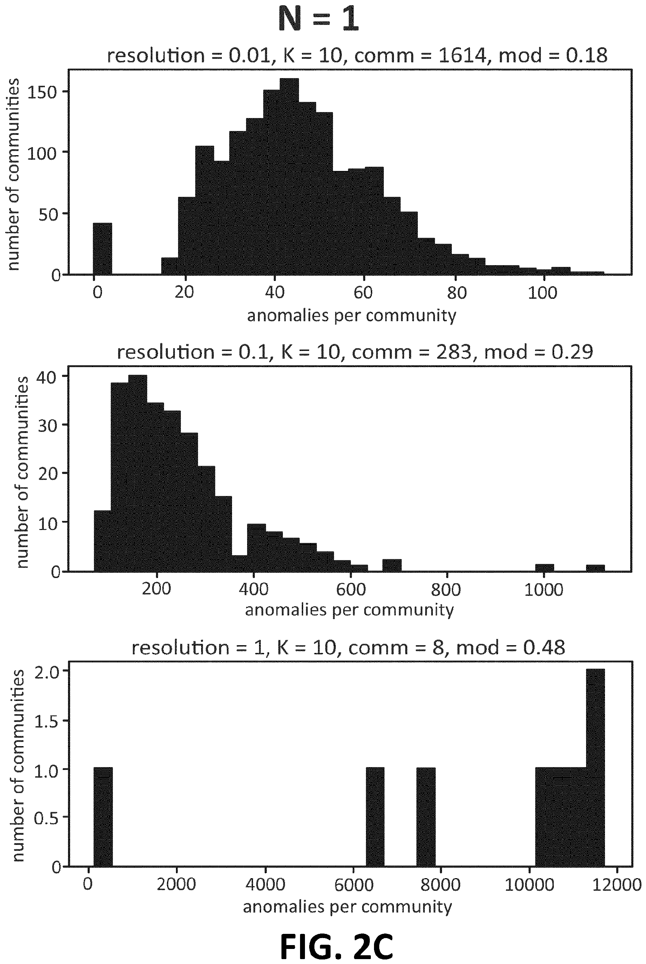

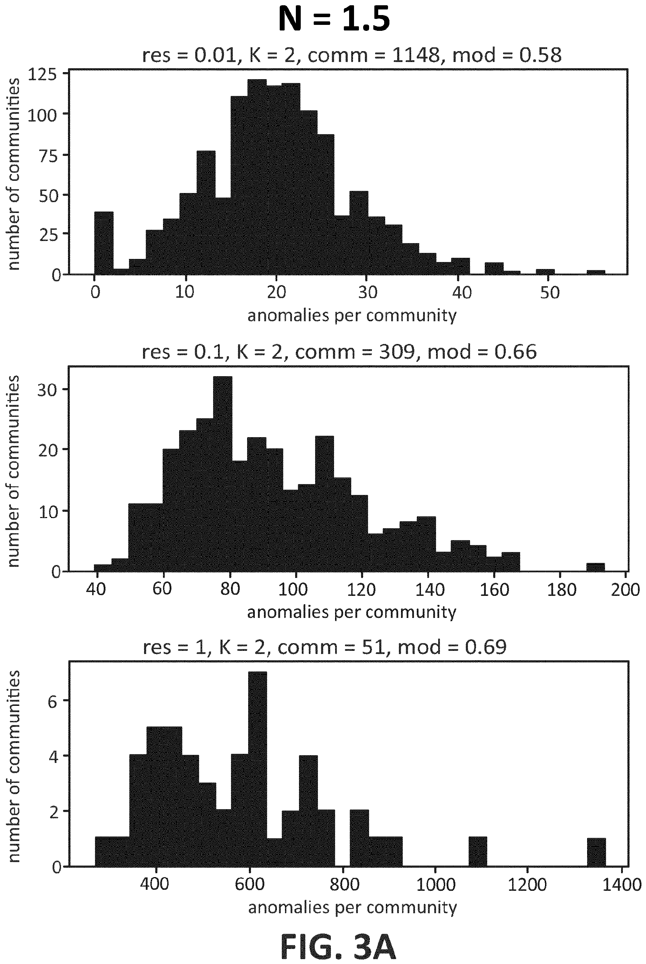

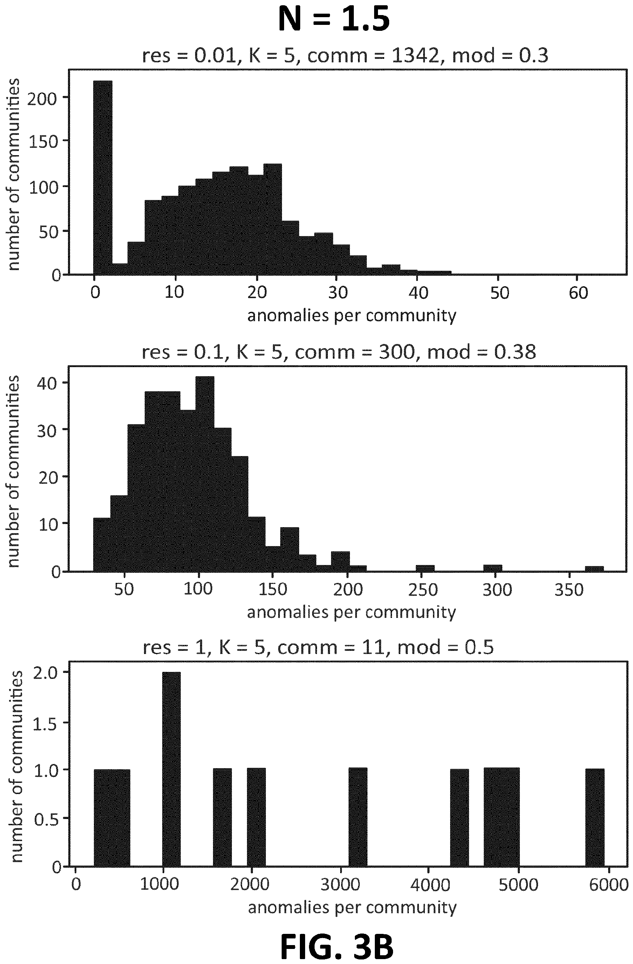

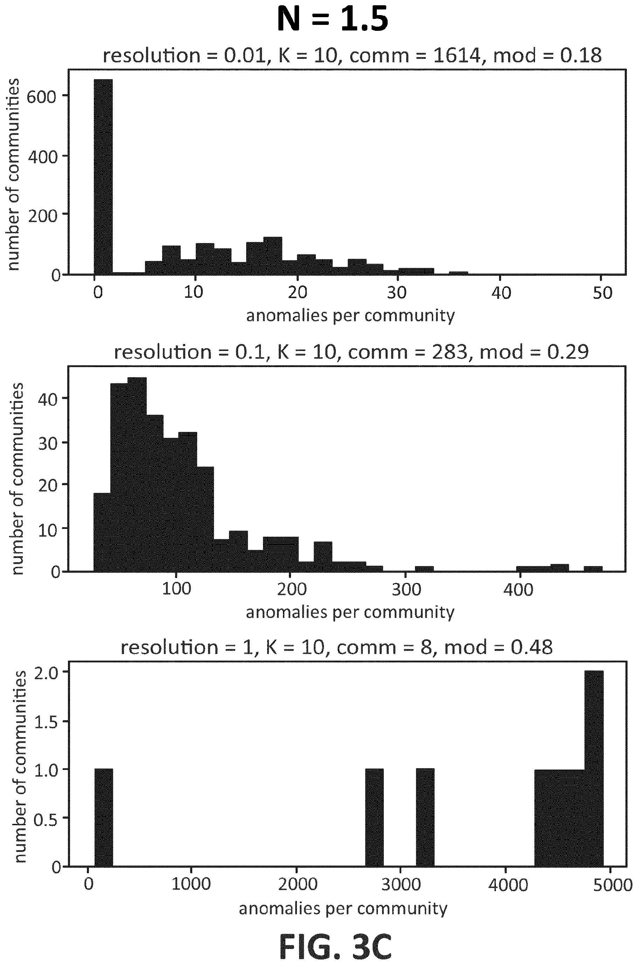

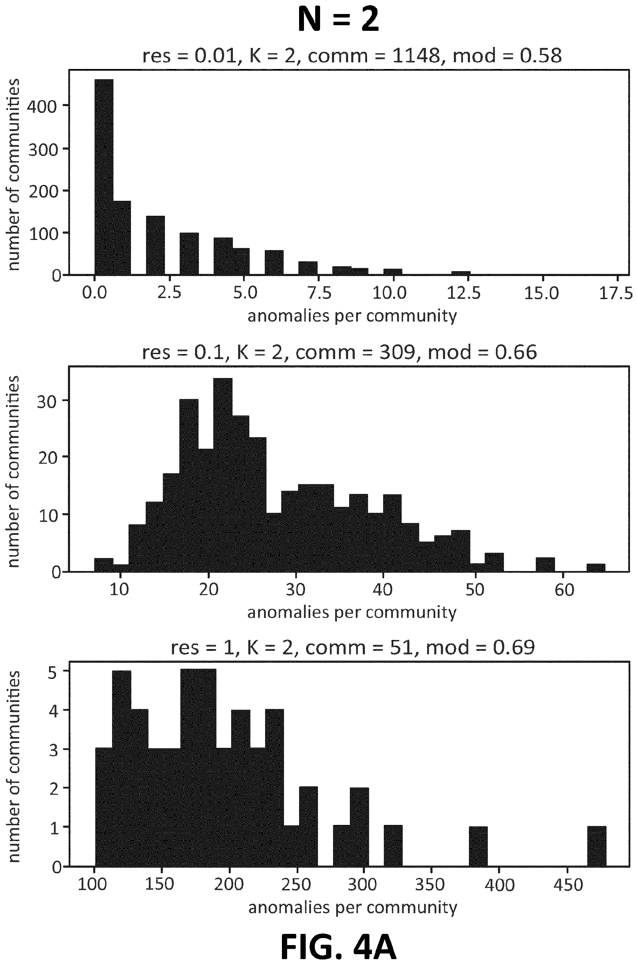

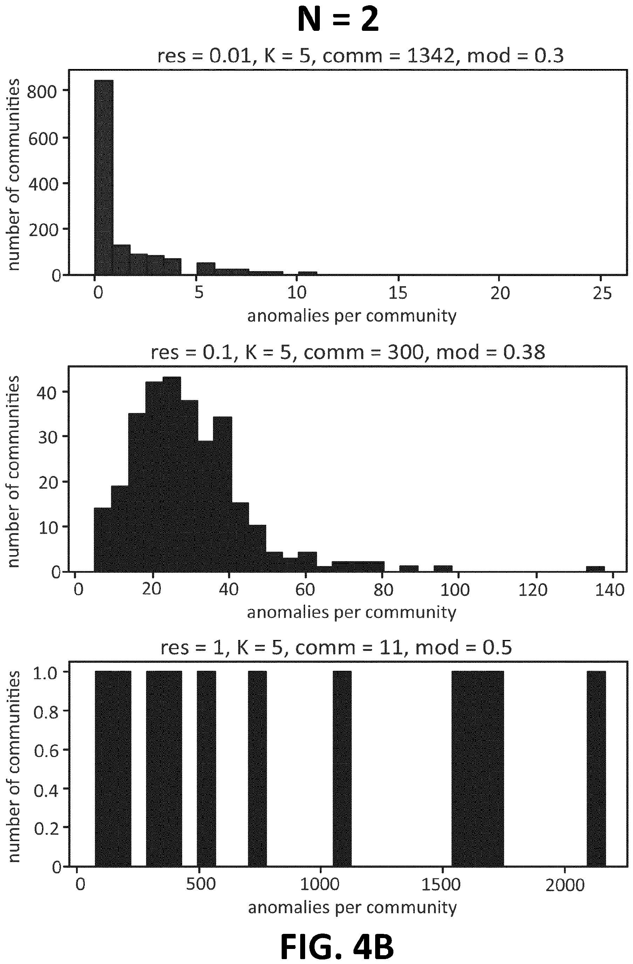

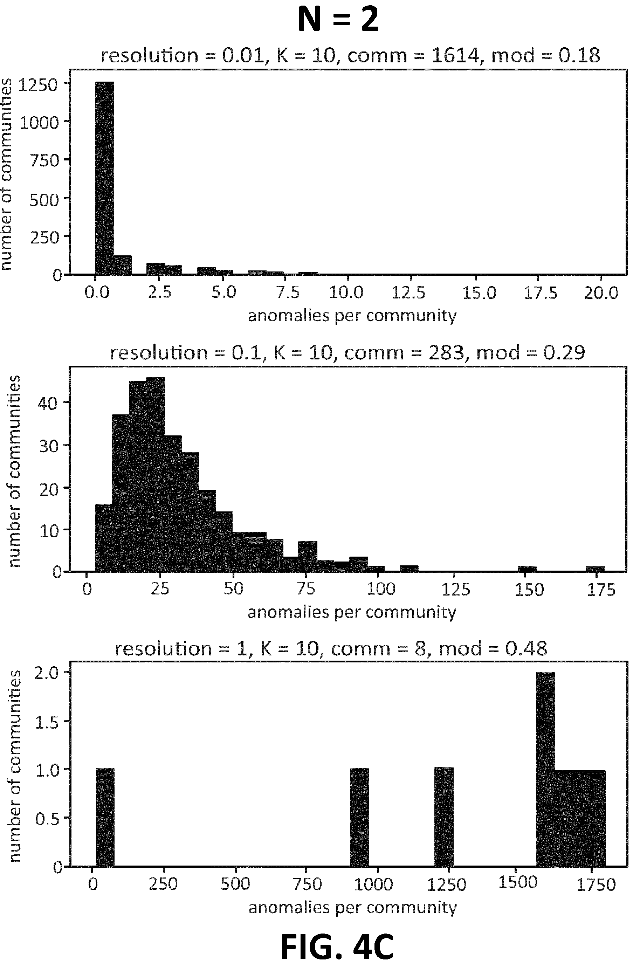

Figures 2A, 2B and 2C show a graphic of the distribution of number of anomalies per communities for different combinations of the K hyperparameter (K= 2, K = 5 and K= 10 respectively) and the resolution hyperparameter when the value of the threshold parameter N equal to 1. Figures 3A, 3B and 3C show a graphic of the distribution of number of anomalies per communities for different combinations of the K hyperparameter (K= 2, K = 5 and K= 10 respectively) and the resolution hyperparameter when the value of the threshold parameter N equal to 1'5. Figures 4A, 4B and 4C show a graphic of the distribution of number of anomalies per communities for different combinations of the K hyperparameter (K= 2, K = 5 and K= 10 respectively) and the resolution hyperparameter when the value of the threshold parameter N equal to 2. Resolution (res), number of neighbors K, number of communities (comm) and modularity (mod) are provided in each subplot. This information built on the set of ground truth anomalies can also be used to periodically control the accuracy of a specific setting for the anomaly detection approach and so capture the potential flexibility and adaptability of the proposed method.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A computer program implemented method for detecting anomalies in a mobile network, the method comprising:
i) collecting a time series data input (1) based on performance metrics obtained for a plurality of network elements of the mobile network;
ii) defining a similarity metric as a multi-dimensional vector of performance-related metrics by calculating the squared euclidean distance between network elements using the performance metrics obtained for the network elements;
iii) detecting (2) clusters of network elements that have the same value of the similarity metric by applying the Louvain algorithm;
the method **characterized by** further comprising:
iv) obtaining a first list (3) of network elements from the clusters with anomalies at a same timeframe, each network element of the first list (3) having a value of the similarity metric in the timeframe which differs from the average value of the similarity metrics of the clusters to which the network element belongs in a number N of times the standard deviation for the used performance metric calculated for all the network elements of the same cluster, N being a tunable threshold parameter, N > 0;
v) identifying a parent network element which is the nearest network element to all the network elements of the first list (3) by using a topology graph (4);
vi) obtaining a second list (4) of network elements which comprises the first list (3) of network elements and, if at least one parent parent network element is identified, further comprises the identified parent network element;
vii) checking the second list (4) against a ticketing or alarm system to check whether any open ticket or active alarm is associated with any network element of the second list (4) and all the network elements for which any ticket or alarm is active are dropped out (6a) from the the second list (4) to obtain a third list (6) of of network elements;
viii) repeating steps iv)-vi) for different timeframes and obtaining a fourth list (8) of network elements comprising the network elements that have the same value of the similarity metric for each timeframe and the time series metrics.

2. The method according to claim 1, wherein the performance metrics are obtained from the end-user side of the mobile network.

3. The method according to claim 2, wherein the performance metrics are selected from packet loss, retransmissions, throughput and latency.

4. The method according to any preceeding claim, wherein the performance metrics comprises metrics obtained from the network side of the mobile network by network counters.

5. The method according to claim 4, wherein the performance metrics are selected from signal strength metrics, network performance metrics, network occupancy and user mobility.

6. The method according to any preceeding claim further comprising classifying the network elements of the fourth list (8) according to a list (9) of categories defined by the mobile network operator.

7. The method according to any preceeding claim, further comprising raising a ticket or generating an alarm (10) for the network elements of the fourth list (8).

8. The method according to any preceeding claim, wherein detecting (2) clusters of network elements comprising tuning the hyperparameters of the Louvain algorithm: number of neighbour network elements and resolution.

9. The method according to any preceeding claim, wherein the tunable threshold parameter N are selected from N= 1, N = 1.5 and N = 2.

## Patentansprüche

1. Ein in einem Computerprogramm implementiertes Verfahren zum Erfassen von Anomalien in einem Mobilnetz, wobei das Verfahren folgende Schritte aufweist:
i) Sammeln einer Zeitreihen-Dateneingabe (1) basierend auf Leistungsmetriken, die für eine Mehrzahl von Netzelementen des Mobilnetzes erhalten werden;
ii) Definieren einer Ähnlichkeitsmetrik als ein mehrdimensionaler Vektor leistungsbezogener Metriken durch Berechnen des quadrierten euklidischen Abstands zwischen Netzelementen unter Verwendung der Leistungsmetriken, die für die Netzelemente erhalten werden;
iii) Erfassen (2) von Clustern von Netzelementen, die den gleichen Wert der Ähnlichkeitsmetrik aufweisen, durch Anwenden des Louvain-Algorithmus;
wobei das Verfahren **dadurch gekennzeichnet ist, dass** es ferner folgende Schritte aufweist:
iv) Erhalten einer ersten Liste (3) von Netzelementen aus den Clustern mit Anomalien bei einem gleichen Zeitrahmen, wobei jedes Netzelement der ersten Liste (3) einen Wert der Ähnlichkeitsmetrik in dem Zeitrahmen aufweist, der sich von dem Durchschnittswert der Ähnlichkeitsmetriken der Cluster, zu denen das Netzelement gehört, in einer Anzahl N von Malen der Standardabweichung für die verwendete Leistungsmetrik unterscheidet, die für alle Netzelemente des gleichen Clusters berechnet wird, wobei N ein abstimmbarer Schwellenparameter ist, N > 0;
v) Identifizieren eines Mutternetzelements, das das nächstgelegene Netzelement zu allen Netzelementen der ersten Liste (3) ist, durch Verwenden eines Topologiegraphen (4);
vi) Erhalten einer zweiten Liste (4) von Netzelementen, die die erste Liste (3) von Netzelementen aufweist, und die, wenn zumindest ein Mutter-Mutternetzelement identifiziert wird, ferner das identifizierte Mutter-Netzelement aufweist;
vii) Überprüfen der zweiten Liste (4) gegenüber einem Ticketing- oder Alarmsystem, um zu überprüfen, ob ein offenes Ticket oder ein aktiver Alarm einem Netzelement der zweiten Liste (4) zugeordnet ist, und alle Netzelemente, für die ein Ticket oder ein Alarm aktiv ist, aus der zweiten Liste (4) ausgeschieden sind (6a), um eine dritte Liste (6) von Netzelementen zu erhalten;
viii) Wiederholen der Schritte iv) bis vi) für unterschiedliche Zeitrahmen und Erhalten einer vierten Liste (8) von Netzelementen, die die Netzelemente aufweist, die den gleichen Wert der Ähnlichkeitsmetrik aufweisen, für jeden Zeitrahmen und die Zeitreihenmetriken.

2. Das Verfahren gemäß Anspruch 1, bei dem die Leistungsmetriken von der Endbenutzerseite des Mobilnetzes erhalten werden.

3. Das Verfahren gemäß Anspruch 2, bei dem die Leistungsmetriken aus einem Paketverlust, Neuübertragungen, Durchsatz und Latenz ausgewählt werden.

4. Das Verfahren gemäß einem vorherigen Anspruch, bei dem die Leistungsmetriken Metriken aufweisen, die von der Netzseite des Mobilnetzes durch Netzzähler erhalten werden.

5. Das Verfahren gemäß Anspruch 4, bei dem die Leistungsmetriken aus Signalstärkemetriken, Netzleistungsmetriken, Netzauslastung und Benutzermobilität ausgewählt werden.

6. Das Verfahren gemäß einem vorherigen Anspruch, das ferner ein Klassifizieren der Netzelemente der vierten Liste (8) gemäß einer Liste (9) von Kategorien aufweist, die durch den Mobilnetzbetreiber definiert sind.

7. Das Verfahren gemäß einem vorherigen Anspruch, das ferner ein Anheben eines Tickets oder Erzeugen eines Alarms (10) für die Netzelemente der vierten Liste (8) aufweist.

8. Das Verfahren gemäß einem vorherigen Anspruch, bei dem das Erfassen (2) von Clustern von Netzelementen ein Abstimmen der Hyperparameter des Louvain-Algorithmus: Anzahl benachbarter Netzknoten und Auflösung aufweist.

9. Das Verfahren gemäß einem vorherigen Anspruch, bei dem der abstimmbare Schwellenparameter N ausgewählt ist aus N = 1, N = 1,5 und N = 2.

## Revendications

1. Procédé mis en oeuvre par programme informatique pour détecter des anomalies dans un réseau mobile, le procédé comprenant :
i) la collecte d'une entrée de données en série(s) temporelle(s) (1) sur la base de mesures de performance qui sont obtenues pour une pluralité d'éléments de réseau du réseau mobile ;
ii) la définition d'une mesure de similarité en tant que vecteur multidimensionnel de mesures rapportées à la performance en calculant la distance euclidienne au carré entre les éléments de réseau en utilisant les mesures de performance qui sont obtenues pour les éléments de réseau ; et
iii) la détection (2) de groupes d'éléments de réseau qui présentent la même valeur de mesure de similarité en appliquant l'algorithme de Louvain ;
le procédé étant **caractérisé en ce qu'**il comprend en outre :
iv) l'obtention d'une première liste (3) d'éléments de réseau à partir des groupes avec des anomalies selon une même temporalité, chaque élément de réseau de la première liste (3) présentant une valeur de la mesure de similarité selon la temporalité qui diffère de la valeur moyenne des mesures de similarité des groupes auxquels l'élément de réseau appartient selon un nombre N fois l'écart type pour la mesure de performance utilisée qui est calculée pour tous les éléments de réseau du même groupe, N étant un paramètre de seuil réglable, N > 0 ;
v) l'identification d'un élément de réseau parent qui est l'élément de réseau le plus proche de tous les éléments de réseau de la première liste (3) en utilisant un graphe de topologie (4) ;
vi) l'obtention d'une deuxième liste (4) d'éléments de réseau qui comprend la première liste (3) d'éléments de réseau et qui, si au moins un élément de réseau parent est identifié, comprend en outre l'élément de réseau parent identifié ;
vii) la vérification de la deuxième liste (4) en regard d'un système de tickets ou d'alarme pour vérifier si oui ou non un quelconque ticket ouvert ou une quelconque alarme active est associé(e) à un quelconque élément de réseau de la deuxième liste (4), et tous les éléments de réseau pour lesquels un quelconque ticket ou une quelconque alarme est actif/active sont supprimés (6a) de la deuxième liste (4) pour obtenir une troisième liste (6) d'éléments de réseau ; et
viii) la répétition des étapes iv) - vi) pour des temporalités différentes et l'obtention d'une quatrième liste (8) d'éléments de réseau qui comprend les éléments de réseau qui présentent la même valeur de la mesure de similarité pour chaque temporalité et les mesures en série(s) temporelle(s).

2. Procédé selon la revendication 1, dans lequel les mesures de performance sont obtenues à partir du côté d'utilisateur final du réseau mobile.

3. Procédé selon la revendication 2, dans lequel les mesures de performance sont sélectionnées parmi la perte de paquet(s), les réémissions, le débit et la latence.

4. Procédé selon l'une quelconque des revendications précédentes, dans lequel les mesures de performance comprennent des mesures qui sont obtenues à partir du côté de réseau du réseau mobile par des compteurs de réseau.

5. Procédé selon la revendication 4, dans lequel les mesures de performance sont sélectionnées parmi les mesures d'intensité de signal, les mesures de performance de réseau, l'occupation du réseau et la mobilité de l'utilisateur.

6. Procédé selon l'une quelconque des revendications précédentes, comprenant en outre la classification des éléments de réseau de la quatrième liste (8) conformément à une liste (9) de catégories qui sont définies par l'opérateur de réseau mobile.

7. Procédé selon l'une quelconque des revendications précédentes, comprenant en outre la création d'un ticket ou la génération d'une alarme (10) pour les éléments de réseau de la quatrième liste (8).

8. Procédé selon l'une quelconque des revendications précédentes, dans lequel la détection (2) de groupes d'éléments de réseau comprend le réglage des hyperparamètres de l'algorithme de Louvain : le nombre d'éléments de réseau voisins et la résolution.

9. Procédé selon l'une quelconque des revendications précédentes, dans lequel le paramètre de seuil réglable N est sélectionné parmi N = 1, N = 1,5 et N = 2.
